# DEMANDE DE BREVET EUROPEEN

(11) **EP 1 231 763 A1**
(43) Date de publication de la demande: **14.08.2002**
(21) Numéro de dépôt: 02290117.7
(22) Date de dépôt: 17.01.2002
(51) Int. Cl.: H04M 1/725, H04M 1/2745, H04L 29/06

(54) **Téléphone portable à navigateur de capture et de rappel d'adresses informatiques**

(30) Priorité: 17.01.2001 FR 0100590
(71) Demandeur: SAGEM SA, 75015 Paris (FR)
(72) Inventeur: Vermande, Michel, 95770 Montreuil Sur Epte (FR)
(74) Mandataire: Bloch, Gérard

(57) **Abrégé**

Le téléphone portable comporte un navigateur (23) pour un réseau informatique du genre de l'Internet, des moyens (21, 50) de capture d'adresses informatiques reçues par le navigateur (23), pour commander des moyens (30, 100) de mémorisation et de rappel des adresses informatiques prévus dans le téléphone, des moyens (31, 34, 80, 90, 400, 500, 510) de génération et de présentation d'icônes électroniques, des moyens (33) de sélection des icônes, pour commander des moyens (150, 200) de mémorisation des icônes et des moyens d'appariement (82) pour apparier les icônes et des adresses informatiques rangées dans les moyens de mémorisation et de rappel (30, 100).

## Description

Lorsque l'utilisateur d'un terminal informatique de transmission de données, tel que par exemple un téléphone portable, veut naviguer sur le réseau de l'Internet, il fournit au navigateur de son terminal l'adresse Internet, encore appelée URL (Universal Resource Locator), du site ou portail qu'il veut appeler.

Lorsqu'il utilise souvent des mêmes adresses, l'utilisateur se constitue un annuaire personnel d'adresses dites favorites (ou bookmarks), qu'il range dans l'équivalent d'une boîte aux lettres particulière d'un serveur du réseau téléphonique d'accès à l'Internet. Pour chaque nouvel appel vers un site Internet, l'utilisateur appelle préalablement le serveur et fait défiler la liste des adresses sur l'écran de son terminal, pour pointer celle qu'il recherche et la fournir au navigateur. Il évite ainsi la nécessité d'une nouvelle saisie de l'adresse. Toutefois, cet annuaire n'est plus accessible si le terminal accède à l'Internet à travers un autre réseau téléphonique.

Par ailleurs, dans le cas d'un terminal à clavier uniquement numérique, comme un téléphone portable, la saisie d'une adresse URL, alphanumérique, est impossible s'il n'a pas été prévu de logiciel de transcodage alphabétique de suites de chiffres saisis au clavier.

La présente invention vise à résoudre au moins l'un des deux problèmes indiqués ci-dessus.

A cet effet, l'invention concerne un téléphone portable comportant un navigateur pour un réseau informatique du genre de l'Internet, caractérisé par le fait qu'il comporte des moyens de capture d'adresses informatiques reçues par le navigateur, agencés pour commander des moyens, de mémorisation et de rappel des adresses informatiques prévus dans le téléphone.

Ainsi, le téléphone portable ou terminal de l'invention comporte un annuaire d'adresses informatiques local, donc toujours disponible et, en outre, il permet en particulier, lors d'une même connexion à l'Internet, de mémoriser les adresses informatiques courantes successives, appelées par l'utilisateur par simple désignation d'un lien d'une page HTML, donc sans saisies successives de la suite des caractères de chaque adresse par un clavier.

Avantageusement, le téléphone portable comporte des moyens de génération et présentation d'icônes électroniques, des moyens de sélection des icônes présentées, agencés pour commander des moyens de mémorisation des icônes sélectionnées, et des moyens d'appariement pour apparier les icônes mémorisées et des adresses informatiques rangées dans les moyens de mémorisation et de rappel.

L'utilisateur peut ainsi repérer rapidement, dans une liste en mémoire, une adresse informatique particulière, à partir de l'icône associée, sans devoir se souvenir de cette adresse en elle-même.

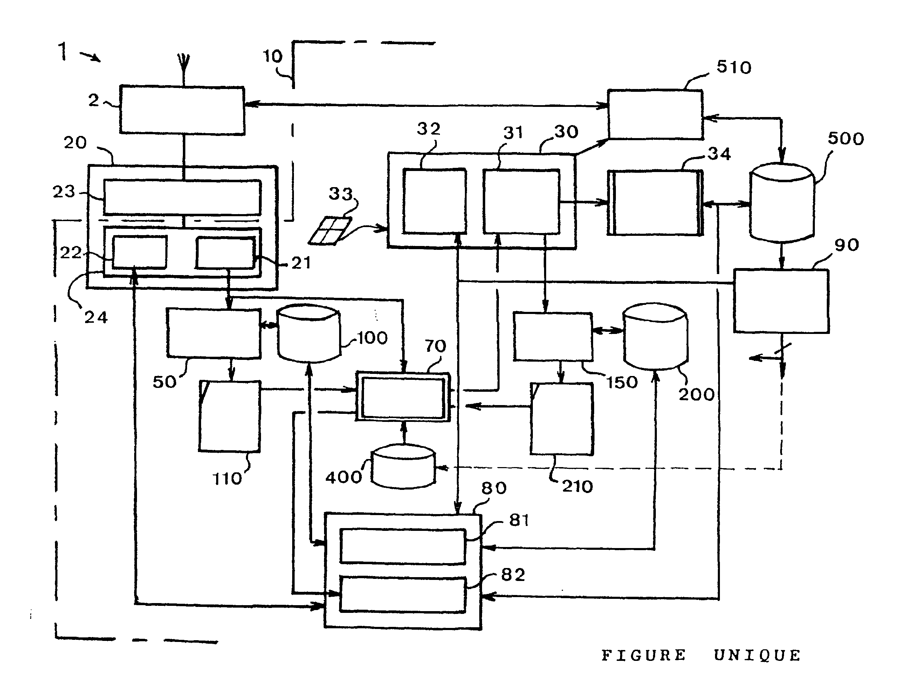

L'invention sera mieux comprise à l'aide de la description suivante d'un exemple de réalisation préféré du téléphone portable de l'invention, en référence à la figure unique annexée qui en est une représentation par blocs fonctionnels.

Le téléphone portable référencé 1 comporte un bloc radio d'émission-réception 2 pour communiquer avec un réseau de radiotéléphonie cellulaire, ici le réseau GSM. Le bloc radio 2 est relié à un navigateur 23 d'un bloc de navigation 20 pour réseau informatique du genre de l'Internet. La référence 10 désigne l'ensemble des autres circuits ou blocs fonctionnels spécifiques à l'invention.

L'ensemble 10 comporte des circuits ou fonctions d'entrée ou capture d'URL et des circuits 22 de sortie ou récupération d'URL par le navigateur 23, formant un port bidirectionnel 24 appartenant au bloc de navigation 20 et relié au navigateur 23.

La fonction 21 sert à capturer des adresses URL du navigateur 23 pour les fournir à une fonction de rangement mémoire 50 des ULR, ou adresses informatiques, capturées. La fonction de rangement 50 range celles-ci dans une mémoire 100 à diverses adresses physiques respectives et inscrit ces adresses physiques dans une table 110.

L'ensemble 10 comporte en outre un ensemble de circuits ou blocs fonctionnels de génération d'icônes électroniques que l'on peut associer aux URL respectives mémorisées dans la mémoire 100. A cet effet, l'ensemble 10 comporte un bloc de commande 30, de traitement de données, et en particulier d'images, comportant un générateur graphique 31 de composition d'icônes et un bloc ou fonction 32 de sélection d'URL. Un clavier 33 commande le bloc de traitement 30 qui lui-même commande un afficheur 34. Le bloc de traitement 30 est, plus généralement, une unité centrale gérant les diverses fonctions, le clavier 33 permettant de commander celles-ci.

Le générateur graphique 31 commande une fonction 150 de rangement mémoire d'icônes, homologue de la fonction 50 relative aux URL. La fonction 150 range les icônes en diverses adresses physiques d'une mémoire 200 d'icônes usuelles, ou favories, homologue de la mémoire d'URL 100, et les adresses physiques ci-dessus sont rangées dans une table 210, homologue de la table 110.

Une fonction 70, de recherche d'icônes pour une URL capturée, est reliée à la fonction de capture 21 et accède en lecture aux tables 110 et 210 d'adresses physiques des URL et icônes en mémoires 100 et 200. Il est en outre prévu ici une bibliothèque 400 d'icônes toutes prêtes, reliée à la fonction de recherche 70.

Un bloc fonctionnel ou fonction 80 d'appariement ULR-icônes et d'affichage, disposant d'un accès en lecture aux mémoires 100 et 200, d'URL et d'icônes, comporte une table de liens 82, établie par la fonction de recherche 70, et une fonction 81 de commande de l'afficheur 34 pour l'affichage d'URL favorites illustrées par des icônes respectives. Le bloc d'appariement 80 est relié à la fonction de récupération 22 pour être activé et pour commander en retour le navigateur 23.

La table des liens 82 fournit l'ensemble des adresses URL, illustrées par les icônes associées, soit au navigateur 23 pour le choix de l'utilisateur, soit à l'afficheur 34, par exemple pour l'effacement des adresses inutiles, ou pour la constitution d'un catalogue séparé d'adresses URL illustrées 500.

Une fonction 510 de transmission bidirectionnelle de messages courts SMS permet d'émettre le catalogue 500 ainsi constitué vers un correspondant du réseau GSM à travers le bloc radio 2. La fonction de transmission 510 permet aussi de recevoir des catalogues du même genre, qui alimentent une fonction 90 de mise à jour des mémoires 100, 200, tables locales 110, 210 et table de liens 82 par l'intermédiaire des fonctions de rangement en mémoire 50, 150 et de recherche 70.

En variante, une carte SIM comporte tout ou partie des mémoires et tables 100, 200, 110, 210, 82, ce qui permet d'utiliser tout téléphone portable en le personnalisant par la carte SIM.

Le fonctionnement du téléphone va maintenant être expliqué plus en détails.

Quand l'utilisateur active, par le clavier 33 et le bloc de traitement 30, la fonction 21 de capture de l'URL en cours d'utilisation, la fonction de rangement mémoire 50 reçoit l'URL considérée et la range en mémoire des URL favorites 100 à une adresse physique qu'elle range dans la table 110 d'adresses physiques mémoire URL favorites.

Simultanément, la fonction de recherche d'icône 70 à associer à cette URL est activée et fait appel soit à la bibliothèque d'icônes 400, soit à l'éditeur graphique 31. En retour, après choix ou édition d'une icône par l'utilisateur, l'éditeur ou générateur graphique 31 fournit une icône à la fonction de rangement mémoire 150 qui la range à une adresse physique déterminée en mémoire d'icônes favorites 200 tandis qu'elle range l'adresse physique considérée dans la table d'adresses physiques des icônes favorites 210.

La table 82 des liens entre adresses physiques des URL favorites et adresses physiques des icônes favorites est mise à jour parallèlement aux tables 110 et 210 par la fonction 70 de recherche d'icônes.

Les adresses URL favorites sont ainsi mémorisées et sont illustrées par des icônes respectives.

Quand l'utilisateur désire rechercher une adresse URL favorite à rappeler, il active la fonction 22 de récupération d'URL, ce qui provoque l'activation de la fonction 81 d'affichage des URL favorites illustrées. Cette dernière fonction effectue alors une recherche, grâce à la table des liens 82, dans les mémoires des URL favorites 100 et des icônes favorites 200, et fournit à l'afficheur 34 l'ensemble des adresses physiques URL illustrées.

L'afficheur 34 affiche la liste des URL accompagnées de leurs icônes respectives et l'utilisateur peut très simplement désigner l'URL désirée. Une fois désignée par la fonction de sélection d'URL 32, l'URL est extraite de la liste affichée et fournie au navigateur 23 par la fonction de récupération 22, par l'intermédiaire de la fonction d'appariement 80.

La liste affichée, éventuellement modifiée par la fonction de sélection d'URL 32, peut aussi être mémorisée dans le catalogue 500 et être transmise à distance en mode données ou SMS par la fonction de transmission 510 sous la commande du bloc de traitement 30.

La fonction de transmission 510, d'échange d'icônes permet aussi de recevoir des catalogues de même genre, qui peuvent alors alimenter automatiquement le catalogue 500 et activer la fonction de mise à jour 90. Cette dernière fonction, activée par l'utilisateur, affiche le contenu du catalogue 500 sur l'afficheur 34 par la fonction d'affichage 81. L'utilisateur peut alors sélectionner les URL qui l'intéressent par la fonction de sélection d'URL 32 et provoquer la mise à jour, par la fonction de mise à jour 90, des mémoires 100, 200, tables locales 110, 210 et table de liens 82, par l'intermédiaire des fonctions de rangement 50, 150 et de la fonction de recherche d'icône 70.

La fonction 510 peut aussi recevoir des icônes seules qui viennent mettre à jour, par l'intermédiaire de la fonction 90, la mémoire 400.

## Revendications

1. Téléphone portable comportant un navigateur (23) pour un réseau informatique du genre de l'Internet, **caractérisé par le fait qu'**il comporte des moyens (21, 50) de capture d'adresses informatiques reçues par le navigateur (23), agencés pour commander des moyens (100) de mémorisation et de rappel des adresses informatiques prévus dans le téléphone.

2. Téléphone portable selon la revendication 1, dans lequel il est prévu des moyens (31, 34, 80, 90, 400, 500, 510) de génération et de présentation d'icônes électroniques, des moyens (33) de sélection des icônes présentées, agencés pour commander des moyens (150, 200) de mémorisation des icônes sélectionnées, et des moyens d'appariement (82) pour apparier les icônes mémorisées et des adresses informatiques rangées dans les moyens de mémorisation et de rappel (30, 100).

3. Téléphone portable selon l'une des revendications 1 et 2, dans lequel les moyens de mémorisation et de rappel (30, 100) sont agencés pour commander des moyens (81) de présentation des adresses informatiques mémorisées associés à des moyens (22, 32) de sélection des adresses informatiques présentées et de transmission de celles-ci au navigateur (23).

4. Téléphone portable selon l'une des revendications 1 à 3, dans lequel les moyens de mémorisation et de rappel (30, 100) comportent une carte SIM.

5. Téléphone portable selon l'une des revendications 1 à 4, dans lequel les moyens de mémorisation et de rappel (30, 100) sont agencés pour être commandés par un clavier numérique (33).

6. Téléphone portable selon l'une des revendications 2 à 5, dans lequel les moyens de fourniture et de présentation d'icônes comportent des moyens (510) d'échange d'icônes à travers un réseau informatique.

7. Téléphone portable selon la revendication 6, dans lequel les moyens (510) d'échange d'icônes sont agencés pour traiter des messages courts de réseau de radiotéléphonique cellulaire.

8. Téléphone portable selon l'une des revendications 2 à 7, dans lequel les moyens de fourniture et de présentation d'icônes comportent un générateur graphique (31) de composition d'icônes.
